# EUROPÄISCHE PATENTANMELDUNG

(11) **EP 3 173 227 A1**
(43) Veröffentlichungstag der Anmeldung: **31.05.2017**
(21) Anmeldenummer: 16200484.0
(22) Anmeldetag: 24.11.2016
(51) Int. Cl.: B32B 18/00, C04B 35/486, C04B 35/626, C04B 35/634, C04B 35/638, B28B 1/00, B28B 13/02, B29C 67/00

(54) **FREIFORM-KERAMIKBAUTEILE**

(30) Priorität: 27.11.2015 CH 17362015
(71) Anmelder: Lakeview Innovation Ltd., 6374 Buochs (CH)
(72) Erfinder: ZIMMERMANN, Dirk, 79350 Sexau (DE)
(74) Vertreter: Rentsch Partner AG

(57) **Zusammenfassung**

Die vorliegende Erfindung betrifft ein Verfahren und ein Vorrichtung (100) zur Herstellung von Freiform-Keramikbauteilen (1), wobei aus einem Gemisch aus einem keramischen Pulver und einem dieses aufnehmenden Bindersystems ein in einem Urformschritt (S2, S3, S4) aus wenigstens zwei nacheinander ausgeformten und miteinander zu verbindenden Teilabschnitten (2, 3) schrittweise ein Grünling geformt, anschliessend das Bindersystem entfernt und ein dann verbleibender Braunkörper gesintert wird. Um die Homogenität und Oberflächenbeschaffenheit von Freiform-Keramikteilen (1) zu verbessern, ist erfindungsgemäss vorgesehen, dass eine Oberflächentemperatur eines vorherigen der wenigstens zwei Teilabschnitte (2, 3) beim Ausformen eines nachfolgenden der wenigstens zwei Teilabschnitte (2, 3) zumindest abschnittsweise auf einem Verbindungstemperaturniveau liegt, auf dem sich vorheriger und nachfolgender Teilabschnitt (2, 3) innig miteinander verbinden. Vorzugsweise wird die Oberflächentemperatur auf einem unterhalb des Verbindungstemperaturniveaus liegenden Vorwärmtemperaturniveau gehalten und vor und/oder beim Ausformen des nachfolgenden Teilabschnitts (2, 3) auf das Verbindungstemperaturniveau gehoben.

## Beschreibung

Die vorliegende Erfindung betrifft ein Verfahren zur Herstellung von Freiform-Keramikbauteilen, insbesondere durch 3-D-Druck, gemäss dem Oberbegriff des unabhängigen Anspruchs 1.

### Technologischer Hintergrund

Technische Keramiken haben sich wegen ihrer vorteilhaften Materialeigenschaften für viele Anwendungen etabliert. Je nach verwendetem Keramikmaterial lassen sich Eigenschaften erhalten, die mit anderen Werkstoffen wie Metallen und Polymeren in dieser Art und Kombination nicht möglich wären. Vorteilhafte Eigenschaften verschiedener Keramikmaterialien sind unter anderem hohe mechanische Festigkeit und Steifigkeit, hohe Härte und Abriebfestigkeit, Hitzebeständigkeit, hohe Dielektrizitätskonstanten und gute Biokompatibilität.

Als Beispielhafte Beschreibung der Anwendung technischer Keramik für Getriebebauteile, der damit Verbundenen Vorteile und eines möglichen Herstellungsprozesses wird verwiesen auf: Zimmermann, Dirk; Keramische Bauteile für hochbeanspruchte Kleinantriebe; in: Antriebstechnik, F&M, 105 (1997) 4, Carl Hanser Verlag, München, 1997, S. 217-220; sowie auf: Zimmermann, Dirk; Keramik in Antrieben; in: at - Aktuelle Technik, 2/2002, B+L Verlags AG, Schlieren, 2002, S.26-28.

Verfahren zum 3D-Drucken von Freiform-Bauteilen sind aus dem Stand der Technik bekannt. Keramik-Polymer-Mischmaterialien für sogenannte Fused Filament Fabrication (FFF) oder Fused Deposition Modeling (FDM) 3-D-Drucker ist in der Entwicklung. Das keramische Pulver ist bei diesen Materialien in einem thermoplastischen Polymer als Bindersystem aufgenommen und wird in Form eines Filamentes einem beheizbaren Druckkopf eines 3-D-Druckers zugeführt, der daraus schichtweise eine Freiform aufbaut. Alternativ sind sogenannte Ceramic-Inkjet-Verfahren zum schichtweisen Aufbau von Grünkörpern aus keramischen Tinten bekannt.

In einem kombinierten Verfahren, das in der EP 2 233 449 A1 beschrieben ist, wird zur Herstellung von Dentalrestaurationen in einem Hot-Melt-Inkjet-Druckverfahren ein Schlicker verwendet, der Keramikpartikel, Wachs und ein radikalisch polymerisierbares Monomer enthält. Aus dem Schlicker wird schichtweise ein Grünkörper geformt und zur Härtung einer radikalischen Polymerisation unterworfen. Bei den verwendeten Keramikpartikeln handelt es sich um Oxidkeramiken, insbesondere Zirkonium- und Aluminiumoxid.

Des Weiteren beschreibt die US2015035209A ein Verfahren zur Herstellung dreidimensionaler metallischer Objekte, die metall-keramische Bestandteile beinhalten können, durch Extrusion einer metalloxidhaltigen Paste, um lagenweise einen Grünkörper aufzubauen. Um in der Paste enthaltenes Lösungsmittel möglichst schnell zu verdampfen, wird bei ca. 50°C extrudiert. Somit produzierte Grünkörper gelangen in einen Ofen, der mit einem Wasserstoff-Argon-Gasgemisch gefüllt ist, um bei Temperaturen von ca. 1000°C das in der Paste enthaltene Metall zu reduzieren sowie zu sintern und abschliessend ein metallisches Objekt zu erhalten.

Die WO14029483A1 beschreibt ein Verfahren zum Herstellen von Grünkörpern in mehreren Schichten unter Verwendung eines pyrolisierbaren Bindemittels. Durch den schichtweisen Aufbau sollen Grünkörper mit sich in einer Richtung ändernden Querschnitten erzeugbar sein. Das Auftragen der Schichten kann z.B. durch ein Tampondruckverfahren erfolgen. Dem Bindemittel werden gegebenenfalls sinterfähige Partikel zugegeben, die nach dem Sintern reaktiv entfernt werden können. Bei ausreichender mechanischer Festigkeit des Grünlings können in bestimmten Bereichen Partikel weggelassen werden, so dass diese Bereiche bei der Pyrolyse entfernt werden.

In der US2010025874A sind "Laser Powder Forming" (LPF), "Direct Ceramic Jet Printing" (DCJP) und Stereolithographie zur Herstellung von Modellen, Bau oder Formteilen in Kleinserie unter Verwendung von Primärpartikeln mit Durchmessern zwischen 10 und 1000nm genannt. Grünkörper können z.B. durch Stereolithographie geformt werden, indem durch Strahlungsenergie eine Suspension lokal ausgehärtet wird. Nach dem Entfernen des Binders wird der so erhaltene Weisskörper gesintert.

Die DE102005011397B4 betrifft ein Sol-Gel-Verfahren zur Herstellung dreidimensionaler keramischer Sinterkörper mittels eines nicht-kristallinen Sinter-Feststoffs durch Trocknen eines Gels, wodurch die Sinterfähigkeit besonders bei der "Free-Form-Fabrication", u.a. auch dem 3-D-Printing verbessert sein soll. Durch den Zusatz des nach dem beschriebenen Verfahren gebildeten Feststoffs zu bekannten kristallinen Sinterrohstoffpulvern oder -pasten, die zum Sintern von Phosphatkeramiken oder Zirconiumoxidkeramiken oder anderen Keramiken eingesetzt werden, sollen die notwendige Sintertemperatur um 100-250 °C herabsetzbar, ein dichteres Kristallgefüge erreichbar und so einer Zersetzung vorbeugbar und damit Eigenschaften zu ermöglichen sein, die sonst nicht erreichbar sind, z.B. das zersetzungsfreie Zusammensintern von Fluorapatit und Calciumzirconiumphosphat oder Fluorapatit und Calciumtitanphosphat.

Ferner ist aus der WO14154901A1 ein selektives schichtweises Lasersintern dreidimensionaler Objekte aus pulverförmigen Substraten bekannt. Die WO15086585A1 betrifft Lasersintern von schichtweise aufgebauten Grünkörpern. Aus der US2014227123A ist ein schichtweises Auftragen sowie Trocknen flüssiger Suspensionen oder plastischer Massen und Sintern getrockneter Schichten an ausgewählten Stellen mittels Laserstrahl ("Layerwise Slurry Deposition" - LSD) bekannt.

Bei den aus dem Stand der Technik bekannten Verfahren ist von Nachteil, dass sie einer Verwendung von speziell auf die jeweilige Art von 3-D-Druck-Technologie abgestimmten Rohmassen bedürfen. Die Abstimmung dieser Rohmassen stellt einen Kompromiss zwischen den Anforderungen des Druckverfahrens sowie denen an die Keramik dar. Auch sind einige Verfahren für bestimmte Keramik-Typen bzw. Anwendungen nicht geeignet. So lassen sich Zirkonoxid-Keramiken kaum in einer Art und Weise durch Laser urformsintern, dass daraus gebildete Bauteile den Anforderungen an technische Keramiken entsprechen, weil sich eine Gefügeumwandlung im Werkstoff beim Aufschmelzen einstellen kann, welche Spannungen im Bauteil erzeugt und die Festigkeit merklich beeinflusst.

Des Weiteren ist bei sämtlichen aus dem Stand der Technik bekannten Verfahren von Nachteil, dass durch sie herstellbare Bauteile insbesondere aufgrund ihrer Schichtung kaum hohen Anforderungen an Homogenität und Oberflächenbeschaffenheit gewisser technischer Keramiken genügen. Zum einen sind daraus resultierende, die Homogenität betreffende Nachteile gemäss dem Stand der Technik nicht zu beheben, weil sie das gesamte Gefüge der Bauteil betreffen. Zum Anderen können gewisse die Oberflächenbeschaffenheit betreffende Nachteile nur teilweise unter einem unerwünschten Nachbearbeitungsaufwand behoben werden.

### Darstellung der Erfindung

Aufgabe der Erfindung ist es, vorteilhafte Verfahren zur Herstellung von Keramikteilen zur Verfügung zu stellen. Solche Herstellungsverfahren sollen eine hohe Prozesssicherheit aufweisen, und eine gleichbleibende hohe Qualität der Keramik sicherstellen. Insbesondere sollen im 3-D-Druck die gleichen Rohmassen verwendet werden können, die für andere formgebende Verfahren, wie z.B. das Pulverspritzgiessen verwendet werden und dafür erprobt sowie bewährt sind. Auch soll die Homogenität und Oberflächenbeschaffenheit von mit Hilfe von 3-D-Druck-Technologien gefertigten Keramikbauteilen gegenüber dem Stand der Technik verbessert werden.

Diese und andere Aufgaben werden gelöst durch ein erfindungsgemässes Herstellungsverfahren gemäss dem unabhängigen Anspruch sowie durch eine entsprechende Vorrichtung. Weitere bevorzugte Ausführungsformen sind in den abhängigen Ansprüchen gegeben.

Insbesondere werden die Nachteile aus dem Stand der Technik überwunden, indem aus einem Gemisch aus einem keramischen Pulver und einem dieses aufnehmenden Bindersystems ein in einem Urformschritt aus wenigstens zwei nacheinander ausgeformten und miteinander zu verbindenden Teilabschnitten schrittweise ein Grünling geformt, anschliessend das Bindersystem entfernt und ein verbleibender Braunkörper dann gesintert wird, wobei eine Oberflächentemperatur eines vorherigen der wenigstens zwei Teilabschnitte beim Ausformen eines nachfolgenden der wenigstens zwei Teilabschnitte zumindest abschnittsweise auf einem Verbindungstemperaturniveau liegt, auf dem sich vorheriger und nachfolgender Teilabschnitt innig miteinander verbinden.

Bei den Teilabschnitten kann es sich beispielsweise um einzelne im 3-D-Druck erzeugte Lagen, Bahnen oder Tropfen handeln, aus denen ein Grünkörper schrittweise aufgebaut wird. Durch die innige Verbindung der Teilabschnitte wird die Homogenität des Grünkörpers und somit des Keramikbauteils verbessert. Das Verbindungstemperaturniveau ist ein Temperaturniveau, dass die innige Verbindung der Teilabschnitte auf physikalischem und/oder chemischem Wege vorantreibt oder zumindest begünstigt, beispielsweise indem Diffusionsprozesse zwischen vorangegangenem und nachfolgendem Teilabschnitt stattfinden.

Die erfindungsgemäße Lösung kann durch die folgenden weiteren, jeweils für sich vorteilhaften Ausführungsformen beliebig ergänzt und weiter verbessert werden:
Gemäss einer ersten weiteren Ausführungsform wird die Oberflächentemperatur auf einem unterhalb des Verbindungstemperaturniveaus liegenden Vorwärmtemperaturniveau gehalten und vor und/oder beim Ausformen des nachfolgenden Teilabschnitts auf das Verbindungstemperaturniveau gehoben. Beispielsweise kann eine Raumtemperatur eines Raumes, in dem der Grünling erzeugt wird, auf dem Vorwärmtemperaturniveau gehalten werden, das in der Regel oberhalb einer Umgebungstemperatur bzw. einer Massbezugstemperatur von beispielsweise 20°C gemäss Normal- oder Laborbedingungen liegt. Durch die Vorwärmtemperatur braucht die Oberfläche des vorherigen Teilabschnitts nur noch soweit erwärmt zu werden, dass eine Temperaturdifferenz zwischen Vorwärmtemperaturniveau und Verbindungstemperaturniveau zu überwinden ist. Zur Überwindung dieser Differenz kann zumindest teilweise vom nachfolgenden Teilabschnitt eingebrachte Erstarrungs- bzw. Schmelzenthalpie genutzt werden.

Gemäss einer weiteren Ausführungsform liegt eine Oberflächentemperatur des vorherigen der wenigstens zwei Teilabschnitte beim Ausformen des nachfolgenden der wenigstens zwei Teilabschnitte zumindest abschnittsweise nahe einer Schmelztemperatur des Bindersystems. Beispielsweise kann die Temperatur beim Ausformen des nachfolgenden Teilabschnittes 2 bis 5 °C unterhalb der Schmelztemperatur des Bindersystems liegen. Bei einem Bindersystem, das POM-H enthält, kann die Schmelztemperatur beispielsweise bei ca. ca. 175-178 °C liegen. Eine geeignete Temperatur nahe der Schmelztemperatur kann bei POM-H beispielsweise bei maximal 170°C knapp unterhalb der Erweichungstemperatur des POM-H liegen.

Gemäss einer weiteren Ausführungsform werden der vorherige und der nachfolgende Teilabschnitt stoffschlüssig miteinander verbunden. Durch die stoffschlüssige Verbindung können die Teilabschnitte zur innigen Verbindung sozusagen miteinander verschweisst werden bzw. ineinander fliessen. Dadurch lässt sich ein sehr homogenes Gesamtgefüge ohne Schwankungen erschaffen, die insbesondere in Verbindungsbereichen zwischen Teilabschnitten aufkommen und erfindungsgemäss vermieden werden können.

Gemäss einer weiteren Ausführungsform werden die wenigstens zwei Teilabschnitte im Wesentlich vollflächig miteinander verbunden. Es findet also nicht nur eine punktuelle oder linienartige Verbindung statt, sondern die Teilabschnitte werden im Wesentlichen entlang ihrer gesamten zueinander gewandten Flächen miteinander verbunden. Die vollflächige Verbindung kann in sämtlichen Raumrichtungen ausgebildet sein. Also kann ein nachfolgender Teilabschnitt beispielsweise sowohl mit einem unter ihm als auch einem neben ihm angeordneten Teilabschnitt vollflächig verbunden werden.

Gemäss einer weiteren Ausführungsform wird aus den wenigstens zwei Teilabschnitten der Grünling im Wesentlichen hohlraumfrei ausgeformt. Die einzelnen Teilabschnitte, die als Lagen, Bahnen oder in anderer beliebiger Form vorliegen können, werden also so miteinander verbunden, dass der Grünkörper im Wesentlichen keine unerwünschten Hohlräume bzw. Lufteinschlüsse aufweist. Die innige und vollflächige Verbindung zwischen den Teilabschnitten kann vermeiden helfen, dass sich Hohlräume im Grünkörper bzw. späteren Keramikteil ausbilden.

Gemäss einer weiteren Ausführungsform wird die Oberfläche des Grünlings zumindest abschnittsweise elektromagnetischer Strahlung ausgesetzt. Bei der elektromagnetischen Strahlung kann es sich zum Beispiel um Licht geeigneter Wellenlänge handeln, um die Oberfläche auf gewünschte Art und Weise gezielt zu aktivieren. Beispielsweise kann mit ultraviolettes bzw. UV-Licht eine chemische Aktivierung in Gang gesetzt werden. Durch infrarot bzw. IR-Licht kann die Oberfläche erwärmt werden. Die elektromagnetische Strahlung kann beispielsweise auch als Laserlicht vorliegen, mit dem besonders gezielt eine Aktivierung bzw. Erwärmung der Oberfläche bewirkt werden kann.

Gemäss einer weiteren Ausführungsform wird die Oberfläche des Grünlings zumindest abschnittsweise einem Gasstoffstrom ausgesetzt. Wenn die Temperatur des Gasstoffstroms oberhalb der Temperatur der Oberfläche liegt, kann diese erwärmt und somit beispielsweise auf das Vorwärmtemperaturniveau oder sogar das Verbindungstemperaturniveau bzw. nahe der Schmelztemperatur gebracht werden. Auch ein partielles Anschmelzen der Oberfläche ist möglich. Hingegen kann die Oberfläche mit Hilfe des Gasstoffstroms auch gekühlt werden. Dies kann von Vorteil sein, wenn der Gasstoffstrom in Kombination mit elektromagnetischer Strahlung eingesetzt wird, um insbesondere deren thermische Auswirkungen lokal und/oder zeitlich zu beschränken, indem ein bestrahlter Bereich beim und/oder nach dem Bestrahlen gekühlt wird.

Gemäss einer weiteren Ausführungsform wird die Oberfläche des Grünlings zumindest abschnittsweise mit Hilfe der elektromagnetischen Strahlung und/oder des Gasstoffstroms geglättet. Die Oberfläche kann vor, während und/oder nach der Applikation verschiedener Teilabschnitte des Grünlings geglättet werden. Beispielsweise kann die Oberfläche nach Abschluss des eigentlichen Urformschrittes geglättet werden. Durch das Glätten können Inhomogenitäten an oder nahe der Oberfläche beseitigt werden.

Gemäss einer weiteren Ausführungsform wird an den Grünling ein weiterer Grünling angeformt. Grünling und angeformter Grünling können als Teilabschnitte im Sinne eines erfindungsgemässen Verfahrens verstanden werden. Ein vorangehender Grünling kann durch ein beliebiges Urformverfahren ausgeformt worden sein, alternativ zum 3-D-Druck beispielsweise durch Spritzgiessen oder Extrusion. Durch diese alternativen Verfahren lassen sich Grünlinge in der Regel mit höherer Geschwindigkeit ausformen als durch 3-D-Druck-Verfahren. Jedoch unterliegen diese alternativen Verfahren wiederum Einschränkungen bei der Formgebung, insbesondere was die Ausformung von Ausnehmungen oder innen liegenden Freiräumen angeht. Diese Einschränkungen können umgangen werden, indem an einen durch eines der alternativen Verfahren ausgeformten Grünlinge ein Freiform-Grünling angeformt wird. Auch können mit den alternativen Verfahren vorgefertigte uniforme Grünlinge durch Anformung eines Freiform-Grünlings individualisiert werden.

Gemäss einer weiteren Ausführungsform werden wenigstens zwei Grünlinge durch mindestens einen Freiform-Grünling miteinander verbunden. Die Grünlinge können auf gleiche oder verschiedene Weisen und/oder zu verschiedenen Zeiten urgeformt werden. Beispielsweise können durch Spritzguss- oder Extrusionsverfahren vorgefertigte Grünlinge als Teilabschnitte eines endgültigen Grünlings miteinander verbunden werden.

Eine erfindungsgemässe Vorrichtung zur Durchführung eines erfindungsgemässen Verfahrens umfasst Mittel und Einrichtungen zur Implementierung oben genannter Verfahrenschritte, die gemäss jeweiliger Anforderungen unabhängig voneinander realisiert oder weggelassen werden können.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch die einzelnen Schritte eines Herstellungsverfahrens für Keramikteile.
- Figur 2: zeigt ein Keramikbauteil gemäss dem Stand der Technik und ein erfindungsgemässes Keramikbauteil jeweils im Grünzustand in einer schematischen Perspektivansicht.
- Figur 3: zeigt das Keramikbauteil gemäß dem Stand der Technik und das erfindungsgemäße Keramikbauteil jeweils in einer schematischen Querschnittsansicht entlang der in Figur 2 eingezeichneten Schnittlinie A-A.
- Figur 4: zeigt eine erfindungsgemäße Vorrichtung zur Herstellung eines erfindungsgemässen Keramikbauteils 1 im Grünzustand.

### Ausführung der Erfindung

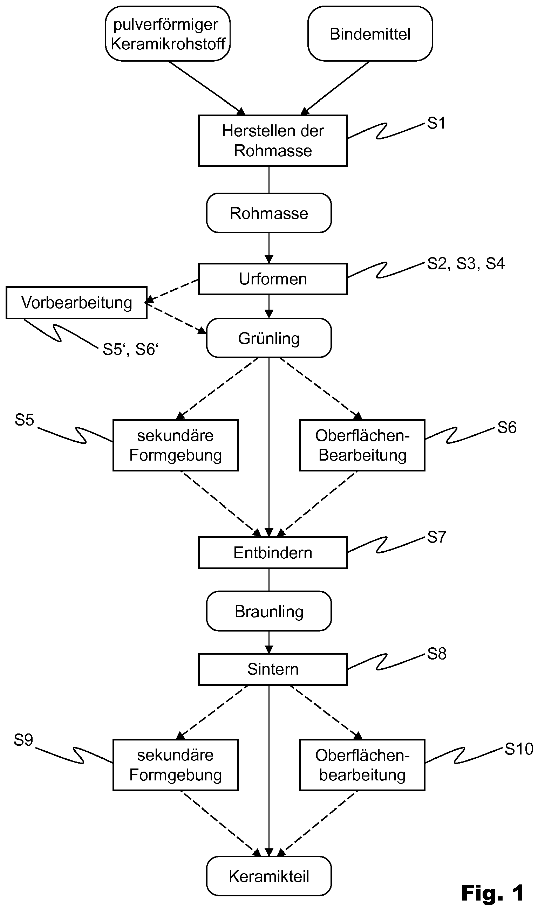

Ein vorteilhaftes Herstellungsverfahren für technische Keramikteile ist in Figur 1 dargestellt. In einem ersten Schritt S1 wird eine spritzgussfähige Rohmasse hergestellt, indem ein pulverförmiges keramisches Ausgangsmaterial mit einem geeigneten thermoplastischen polymeren Bindermaterial vermischt wird.

In einem Urform-Schritt S2, S3 und/oder S4 wird mit geeigneten Spritzguss-, 3D-Druck- bzw. Extrusionswerkzeugen die erhitzte Rohmasse in die gewünschte Form gebracht. Nach dem Abkühlen bzw. Entformen erhält man den sogenannten Grünling, die erste Stufe für den nachfolgenden Herstellungsprozess des Keramikteiles. Der Grünling entspricht in der Form im Wesentlichen dem zukünftigen Keramikteil, während die Dimensionen grösser sind, um die Schrumpfung während des Sinterns auszugleichen.

In einem dritten Schritt S7 wird bei der sog. Entbinderung mit geeigneten Verfahren aus dem Grünling ein Grossteil der Bindermaterial-Matrix entfernt. Der resultierende sog. Braunling besteht im Wesentlichen nur noch aus dem pulverförmigen Keramikausgangsmaterial, welches durch eine kleine verbleibende Menge an Bindermaterial in der Form gehalten wird.

In einem vierten Schritt S8 wird schliesslich der Braunling bei hohen Temperaturen gesintert. Der verbleibende Rest an Bindermaterial wird dabei pyrolisiert. Die für die Sinterung gewählte Temperatur verbleibt unterhalb der Schmelztemperatur der Keramik. Das thermodynamische Gesamtsystem verringert seine freie Enthalpie, indem keramisches Material lokal diffundiert und die einzelnen Partikel an den Berührungsstellen zusammenwachsen, was die Grenzflächenenergie senkt. Nach dem Abkühlen resultiert das fertig gesinterte Keramikteil.

### S1: Herstellung der Rohmasse

In einem erfindungsgemässen Herstellungsverfahren für Keramikteile wird in einem ersten Schritt S1 eine spritzgussfähige Rohmasse bereitgestellt. Als Keramikrohmaterial dient dabei pulverförmiges tetragonales Zirkonium(IV)oxid bzw. Zirkoniumdioxid (ZrO₂, nachfolgend einfach Zirkonoxid). Die tetragonale Kristallphase wird vorteilhaft durch Dotierung mit einigen mol% Yttrium(III)oxid (Y₂O₃) stabilisiert, beispielsweise 3-8 mol%. Die Zugabe von 3 Mol% Y2O3 führt zu einer metastabilen tetragonalen Phase. Bei sehr hoher mechanischer Belastung entstehen lokale Spannungsspitzen, die zur Bildung von Mikrorissen führen können. Das Spannungsfeld an der Rissspitze erzeugt die Umwandlung von der tetragonalen zur monoklinen Phase. Durch die dabei entstehende Volumenzunahme werden die Risse verdichtet und der Rissfortschritt ist gebremst. Häufig wird auch eine kleine Menge 0,2-0,3 % Aluminiumoxid zugegeben, was zusätzlich nochmals eine Erhöhung der mechanischen Eigenschaften bewirkt.Die mittlere Korngrösse beträgt beispielsweise ca. 300 nm und sollte sich insbesondere bei Zirkonoxid zwischen 250 und 350nm bewegen bzw. möglichst homogen sein, da sonst Festigkeitsprobleme auftreten können.

Zirkonoxid weist eine hohe Härte in Kombination mit hoher Elastizität und hoher Biegebruchfestigkeit auf. Dieses keramische Material ist deshalb sehr gut geeignet beispielsweise für bewegliche Bauteile, die unter hohen Belastungen während langer Zeit wartungsfrei und präzise funktionieren sollen, beispielsweise Zahnräder in miniaturisierten Getrieben. Auch für medizinische Implantate, wie beispielsweise Zahnimplantate, welche mit dem Knochengewebe verwachsen sollen, ist Zirkonoxid aufgrund seiner sehr guten Biokompatibilität ein sehr vorteilhaftes Material.

Als thermoplastisches Bindermaterial wird homopolymeres Polyoxymethylen (POM-H) verwendet. Da für die spätere Verwendung die bei POM übliche Säurestabilisation nicht vorteilhaft ist, wird auf eine Veretherung bzw. Veresterung der Polymer-Endguppen verzichtet. Der Schmelzpunkt von POM-H beträgt ca. 175-178 °C.

Das pulverförmige Zirkonoxid wird mit geeigneten Geräten mit dem thermoplastischen Binderpolymer homogen gemischt, so dass eine granulatförmige Rohmasse entsteht, die beispielsweise unter dem Produktnamen Catamold® von der Firma BASF vertrieben wird. Zu Herstellung der Rohmasse werden die Bestandteile unter Wärmeeinwirkung in Kneteranlagen homogen vermischt und anschliessend weiter homogenisiert. Entsprechende Technologien sind dem Fachmann aus der Herstellung von mit Füllstoffen beladenen Spritzgussrohpolymeren bekannt. Am Ende des Prozesses resultiert ein ThermoplastGranulat, wie es üblicherweise beim Spritzgiessen oder Extrudieren als Ausgangsmaterial verwendet wird, oder Thermoplast-Filamente, wie sie üblicherweise beim 3D-Druck verwendet werden.

### S2: Spritzgiessen

Das Rohgranulat wird anschliessend in einem nächsten Schritt S2 als Urformschritt mit geeigneten Thermoplast-Spritzgussmaschinen verarbeitet, in der das Bindermaterial aufgeschmolzen wird. Die nun wieder plastische, homogene Rohmasse wird unter hohem Druck (mehrere hundert bar) in entsprechende Spritzgusswerkzeuge gespritzt, wo die Masse in der gewünschten Form erstarrt. Sämtliche Teile der Spritzgusseinheit, die mit der Spritzgussmasse in Berührung kommen, wie z.B. Schnecke, Zylinder, Düse und Rückstromsperre, sind an die aufgrund der enthaltenen Keramikpartikel relativ hohe Abrasivität der Spritzgussmasse anzupassen. Dazu können diese Teile beispielsweise pulvermetallurgisch behandelt sein, um widerstandsfähige Hartmetalloberflächen aufzuweisen.

Nach dem Entformen und Auskühlen der Spritzgussteile können diese direkt als Grünlinge im Entbinderungsschritt S7 weiterverarbeitet werden, oder einer üblichen Nachbearbeitung unterzogen werden, beispielsweise der Entfernung des Angusses. Analog zu Kunststoffteilen kann der Anguss aufgearbeitet und ein weiteres Mal verwendet werden.

Es ist jedoch in einer alternativen Variante des erfindungsgemässen Verfahrens auch möglich, die Grünlinge einem weiteren formgebenden Schritt S5 zu unterziehen, beispielsweise Fräsen, Bohren, Schleifen oder Drehen.

Alternativ oder zusätzlich kann auch die Oberfläche des Grünlings bearbeitet werden. Ein solcher optionaler Arbeitsschritt S6 wird weiter unten noch beschrieben.

Als weitere Alternative oder zusätzliche Möglichkeit kann in wenigstens einem Vorbearbeitungsschritt S5' und/oder S6' die Form bzw. Oberfläche eines Körpers im Grünzustand noch während, beispielsweise zum Abschluss oder direkt nach dem Urformschritt S2, S2, S4 beeinflusst werden. So ist denkbar, im Vorbearbeitungsschritt S5', S6' die Form eines im Spritzguss S2 erzeugten Grünkörpers in seiner Spritzgussform zu beeinflussen, indem beispielsweise durch sog. "In-mold-closing" verschiedene Grünkörperabschnitte vor dem Auswurf aus dem Werkzeug zu einem Grünkörper zusammengeführt werden. Im Rahmen eines 3D-Druck-Schrittes S3 kann innerhalb eines Vorbearbeitungsschritts S5', S6' ein Abschnitt an einen Grünkörper angeformt oder verschiedene Grünkörper miteinander verbunden werden, der durch ein anderes Urformverfahren erzeugt wurden. Ein durch Extrusion gewonnener Grünkörperstrang bzw. ein Grünkörperprofil kann beim Vorberarbeitungsschritt S5', S6' zum Beispiel vereinzelt werden. Generell kann die Oberfläche während des wenigstens einen Vorbearbeitungschrittes S5', S6' beliebig verändert bzw. bearbeitet werden.

### S7: Entbinderung

Bei erfindungsgemässen Verfahren beruht die Entbinderung auf einem kontrollierten, säuregestarteten katalytischen Abbau des Bindermaterials POM-H in einem Temperaturbereich zwischen 90 bis 120 °C, bevorzugt bei 110°C, wenn das schon oben erwähnte Catamold® verwendet wird. Zirkonoxid hingegen ist gegenüber den meisten Säuren stabil. Beim Entbinderungsprozess werden die Polymerketten von den Enden her depolymerisiert und zu gasförmigem Formaldehyd abgebaut. Die vorteilhaft ebenfalls gasförmige Säure wirkt dabei von der Oberfläche des Grünlings her und diffundiert durch die offene poröse Struktur, die durch den Abbau der Binderpolymer-Matrix allmählich entsteht, ins Innere. Die beim säuregestartetem katalytischen Abbau entstehenden gasförmigen Formaldehyd-Monomere wiederum diffundieren durch die poröse Struktur nach aussen.

Der Entbinderungsprozess erfolgt somit kontinuierlich von aussen nach innen mit einer von der beigegebenen Säuremenge abhängigen Geschwindigkeit von ca. 0.1 bis 0.8 mm/h, insbesondere von 0.4 bis 0.6 mm/h. Eine Erhöhung der Säuremenge beschleunigt zwar den Entbinderungsprozess, der dadurch jedoch ungleichmässig werden kann, was wiederum problematisch sein kann.

Die Entbinderung wird, abhängig von der Dimensionierung der zu entbindernden Teile, so lange durchgeführt, bis die Bindermatrix über das gesamte Volumen des Werkteils soweit abgebaut ist, dass nur noch ein geringer Rest verbleibt (beispielsweise 0.3 -0.5 Gew.% der ursprünglichen Bindermatrix). Es resultiert der im Wesentlichen nur noch aus Zirkonoxid-Partikeln bestehende Braunling. Der verbleibende kleine Rest der Bindermatrix von ca. 0.3 - 0.5 % dient der mechanischen Stabilisierung des Braunlings. Die restliche Bindermatrix wird im darauffolgenden Schritt der Sinterung S8 schon bei wenigen hundert °C beim Erwärmen des Braunlings auf Sintertemperatur vollständig pyrolisiert.

Die Entbinderung erfolgt bei erfindungsgemässen Verfahren bei erhöhter Temperatur und Normaldruck unter Verwendung von Salpetersäure als den Entbinderungsprozess startende Säure. Die Grünlinge werden in einen geeigneten Ofen transferiert und auf die vorgesehen Temperatur erhitzt. Bei einem erfindungsgemässen Verfahren liegt dabei die Temperatur in einem Bereich von 90 bis 110 °C und besonders vorteilhaft bei 110 °C.

Nach dem Erreichen der Prozesstemperatur wird eine gewisse Menge an Salpetersäure in den Ofen gegeben, die bei diesen Temperaturen in den dampfförmigen Zustand übergeht. Die Verweildauer hängt von der Geometrie der Werkteile ab.

Vorteilhaft wird aus dem Ofen austretendes Gas einer Reinigung zugeführt, um Salpetersäure und Formaldehyd aufzufangen. Entsprechende Technologien sind dem Fachmann bekannt, beispielsweise durch Abfackeln zu CO₂ und H₂O oder durch Auskondensation und Gaswäsche.

Nach dem Entbindern werden die Braunlinge abgekühlt und für die nachfolgende Sinterung zwischengelagert.

### S8: Sinterung

Bei der Sinterung verbacken die einzelnen Partikeloberflächen des Keramikmaterials miteinander. In einem ersten Stadium lagern sich die einzelnen Partikel um und durch Materialdiffusion erhöht sich die Kontaktfläche, was die Grenzflächenenergie erniedrigt. In einem zweiten Stadium wachsen die einzelnen Partikel weiter zusammen und bilden sog. Hälse. Es bilden sich Korngrenzen. Im dritten Stadium wachsen die Körner, und das Porenkanalsystem wird reduziert. Während der Sinterung schrumpft das Werkstück und die Dichte steigt.

Die Sinterung von Zirkonoxid erfolgt in einem geeigneten Sinterofen, bei Temperaturen weit unterhalb der Phasenübergangstemperatur von der tetragonalen Kristallphase in die kubische Kristallphase (2370 °C bei reinem Zirkonoxid), und damit natürlich auch unterhalb der Schmelztemperatur (2690 °C). Bei einem erfindungsgemässen Verfahren liegt die Sintertemperatur in einem Bereich von 1350 bis 1550 °C, und vorteilhaft in einem Bereich von 1400 bis 1480 °C, insbesondere bei 1450 °C. Für ein möglichst feines Gefüge des Keramikmaterials werden eher niedrige Sintertemperaturen im unteren Bereich der genannten Temperaturspanne gewählt. Sintertemperaturen im oberen Bereich der Temperaturspanne erhöhen hingegen die Dichte und Korngrösse des Keramikmaterials, wodurch dessen Elastizität und Festigkeit abnehmen.

Der gesamte Sintervorgang dauert bei Zirkonoxid in Abhängigkeit von gewählter Temperatur und Bauteilgrösse ca. 24 bis 36 Stunden. Nach der Sinterung werden die Keramikteile langsam abgekühlt. Sie sind dann in ihrer Urform erstellt, mechanisch fest und ihre Oberfläche ist geschlossen. Durch den Sinterungsprozess unterliegen die Teile im Vergleich zum Grünling einer Schwindung von linear ca. 22% mit einem Toleranzbereich von ±0.3%. Die Schwindung beruht darauf, dass die nach Auslösen des Binders im Braunling vorhandenen Hohlräume zusammenschrumpfen.

In einer besonders vorteilhaften Variante eines erfindungsgemässen Verfahrens werden der Entbinderungsschritt und der Sinterungsschritt im gleichen Ofen durchgeführt, ohne dass dazwischen der Braunling abgekühlt, zwischengelagert und wieder erhitzt werden muss. Neben der dadurch resultierenden Energieersparnis und Reduktion des Arbeitsaufwands hat ein solches Vorgehen den Vorteil, dass mechanische Belastungen des Werkteils beim Abkühlen und Aufwärmen vermieden werden, und die sehr empfindlichen Braunlinge nicht durch fehlerhafte Behandlung beschädigt werden können.

Ein weiterer Vorteil liegt darin, dass ein solcher Ofen derart gebaut werden kann, dass er alle Schritte vom Grünling bis zum fertig gesinterten Keramikteil automatisch durchführen kann. Ein derartiger Ofen mit vergleichsweise kleinem Ladevolumen kann beispielsweise in einer Werkstatt zur Herstellung von Implantaten eingesetzt werden.

Es ist jedoch in einer alternativen Variante des erfindungsgemässen Verfahrens auch möglich, die Keramikteile nach dem Schritt S8 des Sinterns einem zusätzlichen formgebenden Schritt S9 zu unterziehen, beispielsweise Fräsen, Bohren, Schleifen oder Drehen.

Alternativ oder zusätzlich kann auch die Oberfläche der Keramikteile bearbeitet werden. Ein solcher optionaler Arbeitsschritt S10 wird weiter unten noch beschrieben.

### S3: 3D-Druck als formgebendes Verfahren

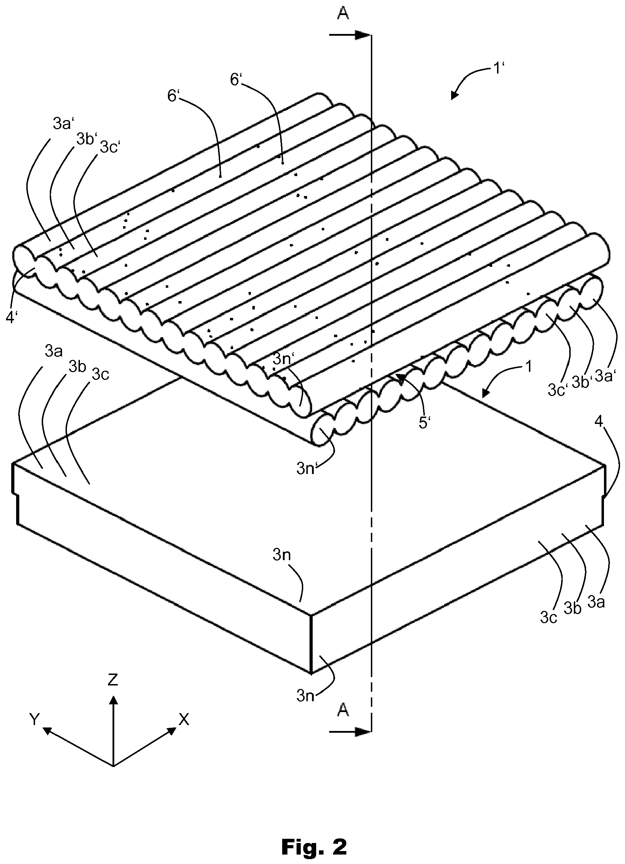

In einer weiteren vorteilhaften Variante eines erfindungsgemässen Verfahrens wird als Urformschritt, also als grundlegender formgebender Schritt zur Herstellung des Grünlings, anstatt des Spritzgussverfahrens S2 ein dreidimensionales Druckverfahren (3D-Druck) S3 eingesetzt. Ein erfindungsgemässes Verfahren ist weiter unten unter Bezug auf die Figuren 2 bis 4 anhand entsprechender Ausführungsbeispiele im Detail beschrieben.

Mit einem geeigneten 3D-Druckersystem werden die Grünlinge additiv aus der thermoplastischen Rohmasse aufgebaut. Die Rohmasse besteht neben dem pulverförmigen, yttriumstabilisierten Zirkonoxid vorteilhaft wiederum aus POM-H als thermoplastischem Binderpolymer. Das thermoplastische Rohmaterial kann mit einem geeigneten Druckkopf, beispielsweise in Form einer Düse, punkt- oder streifenweise in flüssiger oder plastischer Form auf den im Aufbau befindlichen Grünling appliziert werden (sog. Fused Deposition Modelling). Um bei auskragenden Formen die notwendigen Stützstrukturen aufzubauen, kann ein zweites Material verwendet werden, beispielsweise ein in Lösungsmitteln leicht lösliches Polymer, dass anschliessend an den 3D-Druck des Grünlings aufgelöst werden kann, so dass nur das Materials des Grünlings verbleibt. Alternativ kann auch Bindermaterial ohne Zirkonoxid verwendet werden, welches bei der Entbinderung des Grünlings restlos abgebaut bzw. entfernt wird.

Alternativ kann das Rohmaterial als feines, rieselfähiges Pulver bereitgestellt und schichtweise durch Laserlicht aufgeschmolzen werden (sog. selektives Laserschmelzen), oder gesintert (sog. selektives Lasersintern), wobei sich hier der Begriff "Sintern" auf die Thermoplastpartikel bezieht, und nicht etwas auf das nachfolgende Sintern der Vielzahl an Keramikpartikeln innerhalb der Thermoplastpartikel. Um die Schmelztemperatur zu senken, kann die Kettenlänge des POM-H Polymers kürzer gewählt werden als bei einer Rohmasse für ein Spritzgussverfahren.

Der Vorteil von 3D-Druck bei der Anfertigung von Grünlingen liegt bei der Fertigung von Einzelteilen oder Kleinserien. Insbesondere lassen sich auf diese Weise aufgrund spezifischer 3D-Daten grössere Keramik-Implantate anfertigen, beispielsweise für die rekonstruktive Gesichtschirurgie.

Die auf diese Weise angefertigten Grünlinge können direkt mit den Schritten S7 (Entbinderung) und S8 (Sinterung) zum fertigen Keramikteil weiterverarbeitet werden. Alternativ kann vor der Entbinderung noch ein sekundärer Formgebungsschritt S5 erfolgen, und/oder eine Oberflächenbehandlung S6.

### S4: Extrusion als formgebendes Verfahren

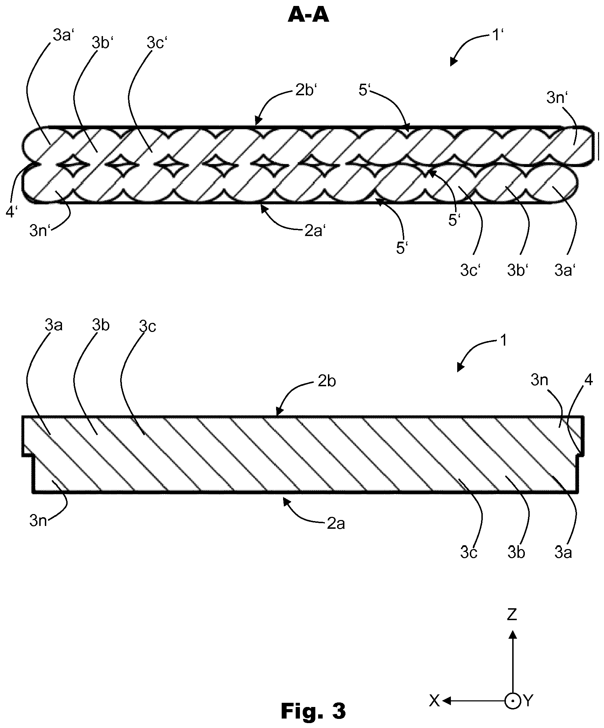

In einer weiteren vorteilhaften Variante eines erfindungsgemässen Verfahrens wird als Urformschritt zur Herstellung des Grünlings anstatt des Spritzgussverfahrens S2 oder des dreidimensionalen Druckverfahren S3 ein Extrusionsverfahren S4 eingesetzt. Der entsprechende Herstellungsprozess ist schematisch in Figur 3 dargestellt.

Ein Vorteil der Extrusion bei der Anfertigung von Grünlingen liegt bei der Fertigung von Kleinserien mit Stückzahlen, für die einerseits zu gering sind, als dass sich die Herstellung eines Spritzgusswerkzeugs lohnen würde, und die andererseits zu gross für die wirtschaftliche Anwendung eines 3D-Druckverfahrens sind. Insbesondere lassen sich durch Extrusion kleine gleichförmige Bauteile, wie beispielsweise Zahnräder oder Achsen, anfertigen.

### S5: Sekundäre Formgebung des Grünlings

Die Form des Grünlings kann den jeweiligen Anforderungen gemäss zumindest abschnittsweise beim und/oder nach dem Ent- bzw. Ausformen im Rahmen wenigstens eines sekundären Formgebungsschrittes S5 manipuliert werden.

Die Manipulation kann insbesondere erforderlich sein, wenn der Grünling durch Schwindungsprozesse beim Abkühlen einen Verzug aufweist. Dies kann beispielsweise der Fall sein, wenn der Grünling ein Vielzahl von auf einem Träger bzw. einer Trägerplatte angeordneten Bauteilen umfasst. Wenn die Bauteile entlang einer Längsseite des Trägers oder auf einer Flachseite der Trägerplatte angeordnet sind, so kann es erforderlich sein, einen Verzug des Trägers bzw. der Trägerplatte auszugleichen.

Der Ausgleich kann durch Zerspanen, beispielsweise Planschleifen der Bauteile, erfolgen. Um den Ausgleich zu erzielen können Abschnitte des Bauteile und/oder des Trägers abgenommen werden. Je nach Anforderung ist insbesondere bei relativ kleinen Bauteilen die Zerspanung sehr präzise, beispielsweise in Bereichen von 2 bis 10 µm maximalen Materialabtrags durchzuführen.

Des Weiteren kann die Manipulation erforderlich sein, wenn der Grünling durch Extrusion geformt ist. So wird bei der Extrusion in der Regel ein Grünkörperstrang bzw. -profil geformt, das eine Vielzahl noch zu vereinzelnder Bauteile im Grünzustand umfasst. Die Vereinzelung kann beispielsweise durch ein regelmässiges Abtrennen extrudierter Grünkörper aus dem Strang bzw. Profil erfolgen.

Da durch Extrusion in der Regel nur Stränge und Profile mit konstantem Querschnitt geformt werden können, sind jegliche an extrudierten Grünkörpern gewünschte Querschnittsveränderungen nachträglich anzubringen. So können am Grünling insbesondere jegliche Art von Vertiefungen, wie beispielsweise Kerben oder Nuten, entlang dessen Aussenumfang angebraucht werden.

Die Vertiefungen können zum einen durch Zerspanen ausgeformt werden. Zum anderen können die Vertiefungen aufgrund der thermoplastischen Eigenschaften des Grünlings mit Hilfe von Umform-Werkzeugen erzeugt werden, die in die Oberfläche des Grünlings eindringen. Beispielsweise kann ein Eindrücken der Oberfläche erfolgen, solange der Grünling nach dem Extrudieren noch nicht vollständig erkaltet ist, oder das Eindrücken erfolgt am erkalteten Grünkörper mittels eines erwärmten Werkzeugs, beispielsweise eines Stempels.

Zwar wäre als weitere Alternative eine sekundäre Formgebung am Braunling möglich. Jedoch ist der Braunling im Vergleich zum Grünling oder gesinterten Keramikteil relativ Spröde und zerbrechlich. Der Braunling ist nämlich, wie schon erwähnt, im Wesentlichen nur durch den Verbleibenden Binder zusammengehalten und weist eine vergleichsweise offenporige Struktur auf. Dies erschwert die Bearbeitung des Braunlings.

Um hier Abhilfe zu schaffen kann der Braunling zumindest oberflächlich in ein Füllmaterial, beispielsweise ein flüssiges thermoplastisches Polymer getaucht werden. Das erstarrte Polymer würde zumindest oberflächig die Poren des Braunlings füllen und diesen somit stabilisieren, was dessen sekundäre Formgebung, beispielsweise durch Einspannen sowie Zerspanen vereinfacht. Nach der sekundären Formgebung kann das Füllmaterial in einem weiteren Entbinderungsschritt und/oder beim Sintern pyrolisiert werden. Allerdings ist das Porenverfüllen mit einem gewissen Zeitaufwand verbunden, der sich nachteilig auf den Produktionsablauf bzw. die Produktionsgeschwindigkeit auswirken kann.

### S6: Oberflächen-Bearbeitung des Grünlings

Vorteilhaft wird die Erhöhung der Oberflächenrauhigkeit bereits beim Grünling vorgenommen, da dieser einfacher zu bearbeiten ist. In einer vorteilhaften Variante wird die Oberfläche des Grünlings sandgestrahlt. Da der Grünling eine wesentlich geringere Härte aufweist als das gesinterte Keramikteil, dauert dieser Prozess wesentlich kürzer als beim gesinterten Keramikteil.

In einer anderen vorteilhaften Variante wird die Oberfläche des Grünlings mit einer Vielzahl von eng fokussierten Laserpulsen bestrahlt, um die Oberfläche punktförmig aufzuschmelzen oder vorzugsweise zu verdampfen und so die gewünschte Rauhigkeit zu erreichen.

In einer weiteren Ausführungsform werden feine Keramikpartikel der gleichen Art wie die in der Rohmasse, also beispielsweise Zirkonoxid-Partikel, mit geeigneten Verfahren mit einer sehr dünnen Schicht Bindermaterial überzogen. Der Grünling kann nun mit diesen Partikeln beschichtet werden. Beispielsweise können die Grünlinge mit Heissluft oder Infrarot kurzfristig an der Oberfläche soweit erwärmt und die thermoplastische Matrix angeschmolzen werden, dass die binderbeschichteten Partikel daran kleben bleiben, wenn der erwärmte Grünling in eine Kammer mit verwirbeltem Partikelstaub gebracht wird, oder komplett oder zumindest gezielt abschnittsweise in ein Bad von entsprechendem Partikelstaub getaucht wird. Ein derart beschichtetes Keramikteil kann nun mit den bereits beschriebenen Entbinderungsverfahren und Sinterungsverfahren weiter verarbeitet werden. Die anhaftenden Keramikpartikel verbinden sich beim Sintern mit dem Keramikkörper, was zu einer erhöhten Oberflächenrauhigkeit führt.

Alternativ oder zusätzlich kann die Oberfläche des Grünlings zumindest abschnittsweise geglättet werden. Beispielsweise lassen sich so Unebenheiten auf der Oberfläche des Grünlings beseitigen, die sich aus dem jeweiligen formgebenden Verfahren ergeben können. Derartige Unebenheiten können insbesondere beim 3D-Druck-Verfahren im den Übergängen zwischen den einzelnen gedruckten Schichten entstehen. Um die Unebenheiten zu beseitigen kann beispielsweise ein Gasstoffstrom auf die Oberfläche des (noch thermoplastischen) Grünlings gerichtet werden. Auch kann die Oberfläche des Grünlings geschliffen werden.

Als weitere alternative oder zusätzliche Möglichkeit können in den Grünling bzw. einen daraus erzeugten Braunling Additive eingebracht werden, die Transportsubstanzen sowie in diesen aufgenommene Zusatzmaterialien umfassen können. Derartige besonders vorteilhafte Nachbearbeitungsverfahren sind in der Anmeldung der Anmelderin mit dem Titel "Verfahren und Vorrichtung zur Herstellung von Keramikteilen" offenbart, die am gleichen Tag wie diese Anmeldung angemeldet worden ist und deren Offenbarungsgehalt hiermit in seiner Gesamtheit durch Referenz in die Beschreibung mit aufgenommen wird.

### S9: Sekundäre Formgebung des Keramikteils

Die nach den oben genannten erfindungsgemässen Verfahren hergestellten Keramikteile können anschliessend weiter nachbearbeitet werden, beispielsweise mittels verschiedener Schleif- und Polierverfahren, Schneidverfahren, Sandstrahlen, Bearbeitung mittels Laser und Glasieren. Ebenfalls möglich sind Nachbearbeitungsverfahren, welche die strukturellen Eigenschaften der Keramik weiter verbessern, beispielsweise Heisspressen oder heiss-isostatisches Pressen. Beim heiss-isostatischen Pressen, dem sogenannten "HiPen", werden Keramikteile bei einem Druck von 2000 bis 3000 bar und annähernd Sintertemperatur an der Oberfläche nachverdichtet. Somit kann die Bruchfestigkeit des Keramikteils um bis zu 25% auf ca. 1300 MPa gesteigert werden.

Besonders vorteilhafte Nachbearbeitungsverfahren von Keramikteilen sind in der Anmeldung der Anmelderin mit dem Titel "Spezial-Keramikbauteile" offenbart, die am gleichen Tag wie diese Anmeldung angemeldet worden ist, und deren Offenbarungsgehalt hiermit in seiner Gesamtheit durch Referenz in die Beschreibung mit aufgenommen wird.

In einem solchen Verfahren wird in einem ersten Schritt das Keramikteil in eine Haltemasse zumindest abschnittsweise eingegossen oder eingetaucht- bzw. gedrückt. In einem zweiten Schritt wird ein Teil des Keramikteils zerspant. Die Haltemasse erlaubt es dabei, auch sehr fein strukturierte Keramikteile zu bearbeiten. Die Haltemasse schützt das Keramikteil vor mechanischen Beschädigungen und erlaubt das einfache Einspannen in Haltevorrichtung der Zerspanungsmaschine. In einem dritten Schritt wird die Haltemasse wieder entfernt, beispielsweise durch Auflösen der Haltemasse.

Vorteilhaft wird als Haltemasse ein lösliches Polymer, beispielsweise ein Harz, ein Zucker und/oder dessen oxidierte und kondensierte Reaktionsprodukte, verwendet. Das zu bearbeitende Keramikteil wird beispielsweise in die geschmolzene Haltemasse eingegossen oder in eine Haltemasseschicht eingedrückt. Der resultierende Block bzw. Verbund wird für den Zerspanungsvorgang in eine Halterung eingespannt. Nach dem Fräsvorgang wird die Haltemasse bzw. deren Polymermatrix mit geeigneten Lösungsmitteln aufgelöst, beispielsweise mit Wasser und/oder Alkohol bzw. Ethanol, einem Aceton-Wasser-Gemisch, einer wässrigen Borax- oder Ammoniaklösung, usw.

Vorteilhaft wird als Haltemasse ein natürliches Material verwendet, das biologisch abbaubar und physiologisch unbedenklich ist. Neben dem oben genannten Zucker kann als natürliches Harz beispielsweise gereinigter Gummilack verwendet werden. Dieser kann durch ebenfalls unproblematische Lösungsmittel wie Ethanol oder Borax-Lösung gelöst werden und ist mehrfach verwendbar. Alternativ kann auch mit Borax präalkalisierter gereinigter Gummilack verwendet werden, der direkt wasserlöslich ist.

Bei einer ersten Verfahrensvariante wird ein gemeinsames erweitertes Angussstück in Form eines Trägers bzw. einer Trägerplatte mit einer Mehrzahl von beispielsweise identischen Kleinteilen durch Zerspanen bspw. Schleifen entfernt, so dass schliesslich die vereinzelten Keramikkleinteile resultieren, beispielsweise Keramikzahnräder mit Durchmessern von wenigen Millimetern. Das erweitere Angussstück, welches beispielsweise die Form einer Platte haben kann, erlaubt zum einen beim Spritzgiessen einen homogenen Materialfluss über das gesamten Volumen des späteren Keramikkleinteils, und daraus resultierend entsprechend homogene Materialeigenschaften. Zum anderen werden mechanische Beschädigungen des Grünlings beim Entformen vermieden. Ebenfalls ist das Handling während der nachfolgenden Herstellungsschritte stark vereinfacht.

In einer anderen Verfahrensvariante wird flächig ein Teil eines im Wesentlichen plattenförmigen Keramikteils zerspant. Die Keramikplatte weist auf der einen Seite der Platte Ausnehmungen oder Vertiefungen auf, wie beispielsweise Sacklöcher oder Schlitze, welche beim flächigen Wegfräsen des Materials auf der anderen Seite der Platte angeschnitten werden. Es resultiert ein Keramikteil mit durchgehenden Löchern oder Schlitzen, die nicht direkt durch entsprechendes Spritzgiessen des Grünlings zu fertigen wären und die ansonsten nur sehr aufwendig durch nachträgliches Bearbeiten einer Keramikplatte mit Bohren oder Schlitzfräsen hergestellt werden könnten.

### S10: Oberflächen-Bearbeitung des Keramik-Teils

Die Oberfläche des gesinterten Keramikteils ergibt sich im Wesentlichen aus den Eigenschaften der Oberfläche des Grünlings bzw. Braunlings. Mit Spritzguss hergestellte Oberflächen sind vergleichsweise glatt. Für gewisse Anwendungen kann es jedoch vorteilhaft sein, die Oberflächenrauhigkeit des Keramikteils zu erhöhen, beispielsweise bei Implantaten, um das stabile Zusammenwachsen mit Knochengewebe zu erleichtern. Üblicherweise wird dazu die Oberfläche des gesinterten Keramikteils durch Sandstrahlen und/oder Ätzen aufgeraut. Zum Ätzen kann beispielsweise Flusssäure verwendet werden.

Alternativ oder zusätzlich kann die Oberfläche des Keramikteils geglättet werden.

### Beispielhafte Keramikbauteile sowie entsprechende Verfahren und Vorrichtungen

Figur 2 zeigt ein Keramikbauteil 1' gemäss dem Stand der Technik und ein erfindungsgemäßes Keramikbauteil1 jeweils im Grünzustand in einer schematischen Perspektivansicht. Die Keramikteile 1,1' erstrecken sich entlang einer Längsrichtung X, einer Querrichtung Y und einer Höhenrichtung Z, die gemeinsam ein kartesisches Koordinatensystem aufspannen. In ihrer in Figur 1 dargestellten Form können die Keramikbauteile 1,1' im Grünzustand, Braunzustand oder im gesinterten Zustand vor der weiteren Verarbeitung vorliegen.

Das Keramikbauteil 1' gemäß dem Stand der Technik umfasst wenigstens eine vorherige Lage 2a und eine nachfolgende Lage 2b keramischen Rohmaterials, die nacheinander ausgeformt sind. Die beiden Lagen 2a', 2b' umfassen jeweils eine Vielzahl von Bahnen 3a bis n, die jeweils nacheinander aus keramischem Rohmaterial gebildet sind. Beispielsweise können eine Anzahl von jeweils n Bahnen 3a-n' umfassend wenigstens eine vorherige Bahn 3a' und wenigstens eine nachfolgende Bahn 3b' jeweils eine Anzahl von m Lagen 2a-n umfassend wenigstens eine vorherige Lage 2a' und wenigstens eine nachfolgende Lage 2b' ausbilden.

Beim Keramikbauteil 1' gemäß dem Stand der Technik ist deutlich zu erkennen, dass sowohl zwischen den Lagen 2a', 2b' als auch zwischen den Bahnen 3a-n' Verbindungsbereiche 4' bestehen, an denen die Lagen 2a', 2b' und Bahnen 3a-n' aneinander haften bzw. miteinander verklebt sind. An den Verbindungsbereichen 4' sind Hohlräume 5' zwischen den Lagen 2a' ,2b' und den Bahnen 3a-n' gebildet. Ferner kann das Keramikbauteil 1 gemäß dem Stand der Technik weitere Inhomogenitäten 6' beispielsweise in Form von Oberflächen Unregelmäßigkeiten aufweisen.

Das erfindungsgemäße Keramikbauteil 1 umfasst ebenfalls wenigstens eine vorherige Lage 2a und wenigstens eine nachfolgende Lage 2b, die jeweils aus einer Reihe nacheinander ausgeformter Bahnen 3a bis n gebildet sind. Die Lagen 2a, 2b und Bahnen 3a-n stellen jeweils Teilabschnitte 2 bzw. 3 des Keramikbauteils 1 dar und sind allesamt durch Verbindungsbereiche 4 miteinander verbunden. Beim erfindungsgemäßen Keramikbauteil 1 sind die Verbindungsbereiche 4 im Gegensatz zum Stand der Technik derart ausgeformt, dass die Lagen 2a, 2b bzw. Bahnen 3a-n innig miteinander verbunden sind. Beim erfindungsgemäßen Keramikbauteil 1 bestehen optimalerweise weder Hohlräume 5', noch Inhomogenitäten 6'.

Figur 3 zeigt das Keramikbauteil 1' gemäß dem Stand der Technik und das erfindungsgemäße Keramikbauteil 1 jeweils in einer schematischen Querschnittsansicht entlang der in Figur 2 eingezeichneten Schnittlinie A-A. Hier wird besonders deutlich, dass beim Keramikbauteil 1' gemäß dem Stand der Technik insbesondere an den Verbindungsbereichen 4' Hohlräume 5' bestehen. Im Gegensatz dazu kann das erfindungsgemäße Keramikbauteil 1 optimalerweise vollständig homogen und hohlraumfrei ausgeformt sein. Die einzelnen Lagen 2a, 2b bzw. Bahnen 3a bis n lassen sich quasi nicht mehr als solche identifizieren bzw. sind durch ihre innige Verbindung miteinander optimalerweise nicht mehr auseinanderzuhalten.

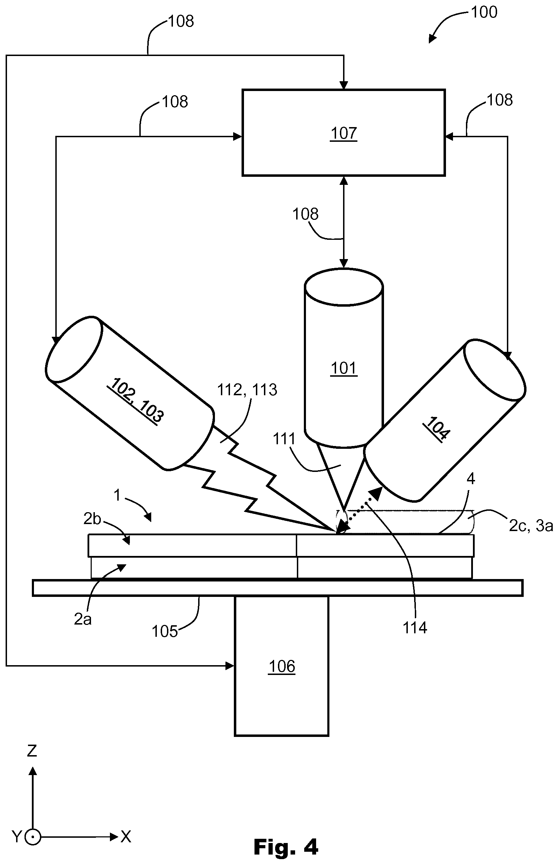

Figur 4 zeigt eine erfindungsgemäße Vorrichtung 100 zur Herstellung eines erfindungsgemäßen Keramikbauteils 1 im Grünzustand. Die Vorrichtung 100 umfasst eine Druckeinrichtung 101, eine Bestrahlung-102 und/oder Beblasungseinrichtung 103, eine Sensoreinrichtung 104, einen das Keramikbauteil 1 aufnehmenden Tisch 105 samt optionalem Antrieb 106 und eine Steuerung- und/oder Versorgungseinheit 107, die über Signal und/oder Versorgungsleitungen 108 mit der Druckeinrichtung 101, der Bestrahlungseinrichtung 102, der Beblasungseinrichtung 103, der Sensoreinrichtung 104 und dem Tisch 105 bzw. dessen Antrieb 106 verbunden ist.

Die Druckeinrichtung 101 erzeugt aus fließfähigem keramischen Rohmaterial 111, dessen Temperatur oberhalb seiner Schmelztemperatur liegt, nacheinander die Bahnen 3a bis n bzw. Lagen 2a bis n. Im in Figur 4 dargestellten Ausführungsbeispiel wird auf die vorherige Lage 2a und die dieser nachfolgenden Lage 2b eine weitere nachfolgende Lage 2c aufgetragen. In einem ersten von beispielsweise einer Anzahl von n Schritten wird dabei eine erste weitere nachfolgende Bahn 3a zur Bildung der weiteren nachfolgenden Lage 2c ausgeformt.

Die Bestrahlungseinrichtung 102 erzeugt elektromagnetische Strahlung 112, die derart auf das Keramikbauteil 1 gerichtet und auftreffen kann, dass sie beispielsweise die Oberfläche der vorherigen Lage 2b vor dem Ausformen der weiteren Lage 2c bzw. deren Bahn 3a und/oder den Verbindungsbereich 4 dazwischen erwärmt und/oder anderweitig aktiviert. Die Beblasungseinrichtung 103 kann einen gezielt auf das Keramikbauteil 1 gerichteten Gasstoffstrom 113 bereitstellen. Der Gasstoffstrom 113 kann ebenfalls die Oberfläche der Lage 2b und/oder den Verbindungsbereich 4 erwärmen oder womöglich im Zusammenspiel mit der elektromagnetischen Strahlung 112 gezielt für eine Kühlung des Verbindungsbereichs 4 und/oder der weiteren nachfolgenden Lage 2c bzw. Bahn 3a sorgen.

Die Sensoreinrichtung 104 kann wenigstens einen Messwert 114, beispielsweise eine Oberflächentemperatur, aufnehmen. Der Tisch 105 kann durch den Antrieb 106 in beliebiger Art und Weise das Keramikbauteil 1 relativ zur Druckeinrichtung 101, Bestrahlungseinrichtung 102, Beblasungseinrichtung 103 und/oder Sensoreinrichtung 104 bewegen. Alternativ oder zusätzlich können die Druckeinrichtung 101, die Bestrahlungseinrichtung 102, die Beblasungseinrichtung 103 und/oder die Sensoreinrichtung 104 relativ zueinander sowie zum Keramikbauteil 1 bzw. Tisch 105 steuerbar und/oder regelbar beweglich ausgestaltet sein.

Die Steuerung und/oder Regelung wird durch die Steuerungs- und/oder Versorgungseinheit 107 vorgenommen, welche über die Signal- und/oder Versorgungsleitungen 108 die Druckeinrichtung 101, die Bestrahlungseinrichtung 102, die Beblasungseinrichtung 103, die Sensoreinrichtung 104, den Tisch 105 und/oder den Antrieb 106 mit Energie, Rohstoffen, Hilfsstoffen und/oder Steuersignalen versorgt bzw. Messsignale, wie den Messwert 114, von diesen empfängt, um die Vorrichtung 100 zur Ausführung eines erfindungsgemäßen Verfahrens anzutreiben.

Im Rahmen des Erfindungsgedankens sind Abweichungen von den oben beschriebenen Ausführungsbeispielen möglich. So kann das erfindungsgemäße Keramikbauteil 1 aus einer beliebigen Anzahl, den jeweiligen Anforderungen gemäss ausgestalteter Lagen 2a bis m und/oder Bahnen 3a bis n ausgeformt sein, die jeweils Teilabschnitte 2, 3 des Keramikbauteils 1 bilden und über Verbindungsbereiche 4 miteinander verbunden sind. Die Vorrichtung 100 kann Druckeinrichtungen 101, Bestrahlungseinrichtungen 102, Beblasungseinrichtung 103, Sensoreinrichtungen 104, Tische 105, Antriebe 106, Steuerungs- und/oder Versorgungseinheiten 107 und/oder Signal- und/oder Versorgungsleitungen 108 in beliebiger Anzahl und Anordnung umfassen, um durch ein erfindungsgemässes 3-D-Druckverfahren aus keramischem Rohmaterial 111 unter Nutzung elektromagnetischer Strahlung 112, Gasstoffströmen 113 und/oder Messwerten 114 das Keramikbauteil 1 auszuformen.

**Bezugszeichenliste**

| | | | |
|---|---|---|---|
| 1 | Keramikbauteil | 102 | Bestrahlungseinrichtung |
| 2,3 | Teilabschnitt | 103 | Beblasungseinrichtung |
| 2a-n | vorherige/nachfolgende Lage | 104 | Sensoreinrichtung |
| 3a-n | vorherige/nachfolgende Bahn | 105 | Tisch |
| 4 | Verbindungsbereich | 106 | Antrieb |
| | | 107 | Steuerungs- und/oder Versorgungseinheit |
| 1' | Keramikbauteil (Stand der Technik) | | |
| 2a-n' | vorherige/nachfolgende Lage (Stand der Technik) | 108 | Signal- und/oder Versorgungsleitung |
| | | | |
| 3a- | n' vorherige/nachfolgende Bahn (Stand der Technik) | | |
| | | 111 | Keramisches Rohmaterial |
| 4' | Verbindungsbereich (Stand der Technik) | 112 | elektromagnetische Strahlung |
| | | 113 | Gasstoffstrom |
| 5' | Hohlraum (Stand der Technik) | 114 | Messwert |
| 6' | Inhomogenität (Stand der Technik) | | |
| | | X | Längsrichtung |
| 100 | Vorrichtung | Y | Querrichtung |
| 101 | Druckeinrichtung | Z | Höhenrichtung |

## Patentansprüche

1. Verfahren zur Herstellung von Freiform-Keramikbauteilen (1), wobei aus einem Gemisch aus einem keramischen Pulver und einem dieses aufnehmenden Bindersystems ein in einem Urformschritt (S2, S3, S4) aus wenigstens zwei nacheinander ausgeformten und miteinander zu verbindenden Teilabschnitten (2, 3) schrittweise ein Grünling geformt, anschliessend das Bindersystem entfernt und ein dann verbleibender Braunkörper gesintert wird, **dadurch gekennzeichnet, dass** eine Oberflächentemperatur eines vorherigen der wenigstens zwei Teilabschnitte (2, 3) beim Ausformen eines nachfolgenden der wenigstens zwei Teilabschnitte (2, 3) zumindest abschnittsweise auf einem Verbindungstemperaturniveau liegt, auf dem sich vorheriger und nachfolgender Teilabschnitt (2, 3) innig miteinander verbinden.

2. Verfahren nach Anspruch 1, **dadurch gekennzeichnet, dass** die Oberflächentemperatur auf einem unterhalb des Verbindungstemperaturniveaus liegenden Vorwärmtemperaturniveau gehalten und vor und/oder beim Ausformen des nachfolgenden Teilabschnitts (2, 3) auf das Verbindungstemperaturniveau gehoben wird.

3. Verfahren nach Anspruch 1 oder 2, **dadurch gekennzeichnet, dass** eine Oberflächentemperatur des vorherigen der wenigstens zwei Teilabschnitte (2, 3) beim Ausformen des nachfolgenden der wenigstens zwei Teilabschnitte (2, 3) zumindest abschnittsweise nahe einer Schmelztemperatur des Bindersystems liegt.

4. Verfahren nach wenigstens einem der Ansprüche 1 bis 3, **dadurch gekennzeichnet, dass** der vorherige und der nachfolgende Teilabschnitt (2, 3) stoffschlüssig miteinander verbunden werden.

5. Verfahren nach wenigstens einem der Ansprüche 1 bis 4, **dadurch gekennzeichnet, dass** die wenigstens zwei Teilabschnitte (2, 3) im Wesentlichen vollflächig miteinander verbunden werden

6. Verfahren nach wenigstens einem der Ansprüche 1 bis 5, **dadurch gekennzeichnet, dass** aus den wenigstens zwei Teilabschnitten (2, 3) der Grünling im Wesentlichen hohlraumfrei ausgeformt wird.

7. Verfahren nach wenigstens einem der Ansprüche 1 bis 6, **dadurch gekennzeichnet, dass** die Oberfläche des Grünlings zumindest abschnittsweise elektromagnetischer Strahlung (112) ausgesetzt wird.

8. Verfahren nach wenigstens einem der Ansprüche 1 bis 6, **dadurch gekennzeichnet, dass** die Oberfläche des Grünlings zumindest abschnittsweise einem Gasstoffstrom (113) ausgesetzt wird.

9. Verfahren nach Anspruch 7 und/oder 8, **dadurch gekennzeichnet, dass** die Oberfläche des Grünlings zumindest abschnittsweise mit Hilfe der elektromagnetischen Strahlung (112) und/oder des Gasstoffstroms (113) geglättet wird.

10. Verfahren nach wenigstens einem der Ansprüche 1 bis 9, **dadurch gekennzeichnet, dass** an den Grünling ein weiterer Grünling angeformt wird.

11. Verfahren nach wenigstens einem der Ansprüche 1 bis 10, **dadurch gekennzeichnet, dass** wenigstens zwei Grünlinge durch mindestens einen Freiform-Grünling miteinander verbunden werden.

12. Vorrichtung (100) zur Durchführung eines Verfahrens nach wenigstens einem der Ansprüche 1 bis 11.
